# EUROPEAN PATENT APPLICATION

(11) **EP 2 732 865 A2**
(43) Date of publication of application: **21.05.2014**
(21) Application number: 13190779.2
(22) Date of filing: 30.10.2013
(51) Int. Cl.: B01D 53/14, B01D 53/22, C10L 3/10

(54) **Integrated hybrid membrane/absorption process for CO2 capture and utilization**

(30) Priority: 15.11.2012 US 201213677945
(71) Applicant: Gas Technology Institute, Des Plaines, IL 60018 (US)
(72) Inventor: Zhou, Shaojun J., Palatine, IL Illinois 60067 (US); Meyer, Howard S., Hoffman Estates, IL Illinois 60169 (US); Lewnard, John, Inverness, IL Illinois 60010 (US)
(74) Representative: Feldmann, Clarence Paul

(57) **Abstract**

A two-stage process for upgrading a gaseous stream containing CO₂ and H₂S in which the gaseous stream and pressurized water are provided to a first stage absorption process in which a portion of the CO₂ is absorbed by the pressurized water. The reduced-CO₂ gaseous stream and a chemical solvent suitable for absorbing CO₂ and H₂S are provided to a second stage absorption process in which the H₂S and remaining CO₂ are removed from the gaseous stream, producing an acid gas stream and an upgraded gaseous stream meeting pipeline-quality specifications.

## Description

### BACKGROUND OF THE INVENTION

### Field of the Invention

This invention relates to the removal of acid gases from a gaseous fluid stream. In one aspect, this invention relates to the use of membrane contactors for removing acid gases from a gaseous fluid stream. In another aspect, this invention relates to the use of packed column absorbers for removing acid gases from a gaseous fluid stream. In another aspect, this invention relates to the removal of CO₂ from flue gas. In yet another aspect, this invention relates to the removal of acid gases from anaerobically derived biogas. In a further aspect, this invention relates to an integrated process for producing pipeline quality biogas.

### Description of Related Art

Numerous processes in the chemical industry produce fluid streams containing acid gases such as CO₂, H₂S, SO₂, CS₂, HCN, and COS. These fluid streams may be gas streams such as natural gas, refinery gas, synthesis gas, flue gas, or reaction gas formed in the processing of waste materials comprising organic substances. Carbon dioxide removed from the fluid streams may be used in numerous processes in the chemical industry for pH control as an alternative to mineral acids. In addition, numerous other industries use CO₂ including wastewater treatment, food and dairy, textiles, paints, paper and coatings and petroleum.

Biogas typically is a gas produced by the breakdown of organic material in the absence of oxygen. Biogas is produced by the anaerobic digestion or fermentation of biodegradable materials, such as biomass, manure, sewage, municipal waste, plant material and crops. Biogas is practically produced as landfill gas by wet organic waste decomposing under anaerobic conditions in a landfill or as digester gas by anaerobic digestion of energy crops and biodegradable wastes. Biogas composition varies depending on the origin of the anaerobic digestion process. For example, biogas produced as landfill gas typically comprises about 50 mol% methane. Typical compositions of biogas include about 50-75 mol% methane, 25-50 mol% CO₂, up to about 10 mol% nitrogen, up to about 1 mol% hydrogen, and up to about 3 mol% H₂S. Among other things, pipeline-quality gas requires a CO₂ content of less than about 2 mol%. Thus, it will be appreciated that raw biogas having such typical compositions is not a pipeline-quality gas and, thus, is not suitable for input into a pipeline.

Processes currently used for removing CO₂ from gas streams include pressure swing adsorption (PSA) where the CO₂ removed from the gas stream is vented to the ambient, conventional membrane processes, and conventional absorption processes using either packed columns with amine or other absorbents. However, these processes are generally too expensive for the small flow rates of biogas available at wastewater treatment plants and many landfills. By small flow rates, we mean flow rates in the range of about 10 ft³/min to about 1000 ft³/min. Accordingly, there is a need for a process for upgrading biogas to pipeline-quality gas specifications which can effectively and efficiently upgrade the small flow rates of biogas generated by wastewater treatment plants, landfills, or any similar sources.

### SUMMARY OF THE INVENTION

Accordingly, it is one object of this invention to provide a process for removing and capturing CO₂ from gaseous fluid streams containing CO₂.

It is another object of this invention to provide a process for upgrading raw biogas to pipeline-quality gas specifications.

It is another object of this invention to provide a process for upgrading raw biogas to pipeline-quality gas specifications which can be used to process the small biogas flow rates typically associated with wastewater treatment plants and landfill gas sites.

These and other objects and features of this invention are addressed by a process for upgrading a gaseous stream containing CO₂ in which pressurized water and said gaseous stream are introduced into a first stage absorption process in which a portion of the CO₂ is absorbed by the pressurized water, producing sour water and a reduced-CO₂ gaseous stream. The reduced-CO₂ gaseous stream and a chemical solvent suitable for absorbing CO₂ is introduced into a second stage absorption process in which the remaining CO₂ in the reduced-CO₂ gaseous stream is removed from the reduced-CO₂ gaseous stream, producing an acid gas stream and an upgraded gaseous stream. Each of the absorption stages may be carried out using a conventional contacting device, such as a packed column absorber or a gas/liquid membrane contactor. In accordance with one embodiment of this invention, the gaseous stream further contains H₂S which is introduced into the first stage absorption process. In accordance with one embodiment, the chemical solvent introduced into the second stage absorption process is suitable for absorbing CO₂ and H₂S, as a result of which the majority of the H₂S in the reduced-CO₂ gaseous stream is removed therefrom in the second stage absorption process. In accordance with another embodiment, the H₂S in the gaseous stream is removed prior to introduction of the gaseous stream into the first stage absorption process. Beneficially, the utilization of sour water and heat generated in the process may be integrated between the CO₂ removal process and the biogas source process.

### BRIEF DESCRIPTION OF THE DRAWINGS

These and other objects and features of this invention will be better understood from the following detailed description taken in conjunction with the drawings, wherein:

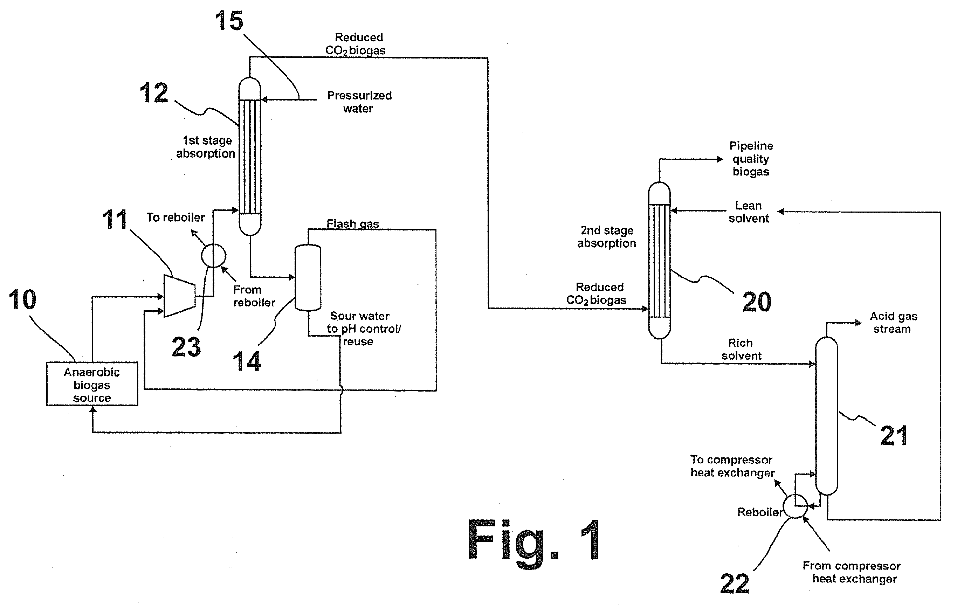

Fig. 1 is a simplified process flow diagram for the process in accordance with one embodiment of this invention employing membrane contactors for biogas upgrading.

### DETAILED DESCRIPTION OF THE PRESENTLY PREFERRED EMBODIMENTS

The invention described herein is a two stage biogas upgrading process utilizing packed column absorbers and/or gas/liquid membrane contactors for wastewater treatment facilities, landfill gas upgrading and other biogas treatment facilities which removes CO₂ from the raw product gas as well as any H₂S present therein. The first stage of the process utilizes high pressure water as an absorbent which removes the bulk of the CO₂ from the incoming biogas. As used herein, the term "high pressure" as it relates to the pressurized water employed in the process of this invention, means pressures in the range of about 100 psig to about 1000 psig. Preferred pressures are in the range of about 200 psig to about 500 psig.

The second stage of the process of this invention utilizes a chemical solvent to remove residual CO₂ and, if present, H₂S from the biogas to pipeline specifications. In accordance with one preferred embodiment, the chemical solvent is an amine solvent in an amine absorption process. Amines suitable for use in the amine absorption process are well known to those skilled in the art and include, but are not limited to, monoethanolamine (MEA), methyldiethanolamine (MDEA), 2-amino-2-methylpropanol (AMP) and piperazine (PIPA).

It is to be understood that, although described in the context of upgrading a biogas stream, the process of this invention may be used to remove CO₂ from any type of CO₂-containing gaseous stream, e.g., flue gas, and such uses are deemed to be within the scope of this invention

A process flow diagram for the process in accordance with one preferred embodiment of this invention employing membrane contactors is shown in Fig. 1. As shown therein, raw biogas from an anaerobic biogas source 10 is provided by way of inlet compressor 11 into a first stage membrane contactor 12 into which pressurized water 15 is also provided. As noted herein above, other CO₂-containing gaseous streams from other gaseous stream sources may be provided instead of raw biogas. Within the first stage membrane contactor, CO₂ in the biogas on the gas side of the membrane passes through the membrane and is absorbed by the pressurized water on the liquid side of the membrane, as a result ofwhich the biogas exiting from the membrane contactor has a reduced CO₂ content. Membrane contactor devices suitable for use in the process of this invention are well known to those skilled in the art. Treated gas, i.e., reduced-CO₂ gaseous stream, from the first stage membrane contactor together with a lean amine solvent are provided to a second stage membrane contactor 20 in which residual CO₂ in the treated gas is further reduced and any H₂S in the treated gas is removed, resulting in a biogas that meets the specifications for pipeline quality gas. The rich amine solvent produced in the second stage membrane contactor is then provided to an amine regeneration step 21 in which it is regenerated for reuse in the second stage membrane contactor. The water-saturated acid gas stream released in the regeneration step may be treated with conventional H₂S treating technology and the remaining CO₂ vented to the atmosphere. Although shown as being membrane contactors in Fig. 1, it will be appreciated that other types of equipment, for example, packed column absorbers, may be employed in place of the membrane contactors in the process of this invention.

In accordance with one embodiment of this invention, the sour water generated in the first stage beneficially may be used to control pH, where necessary or desired, such as in a wastewater treatment facility or in a landfill gas treatment facility to improve biogas production or to neutralize alkaline effluents which may be present. In accordance with one embodiment of this invention, in order to reduce fugitive methane emissions from the sour water stream produced in the first stage membrane contactor, the sour water stream exiting the first stage membrane contactor may be introduced into an intermediate flash process vessel 14. The flashed gas created by the flash process may then be recycled to the inlet compressor 11 for input into the first stage absorption process and the sour water exiting the flash process may be used for pH control in the biogas generation process and/or reused.

In addition to sour water utilization being integrated between the CO₂ removal process and the biogas production process, heat utilization is integrated between the CO₂ removal process and the solvent regeneration process. Heat integration of the process takes place between the rich solvent regeneration step 21 where heat is required and other steps, such as the inlet compressor 11, where heat is generated.

As shown in Fig. 1, heat generated by inlet compressor 11 is provided by compressor heat exchanger 23 to reboiler 22 from which heat is provided to the solvent regeneration process. The cooler heat exchange medium from reboiler 22 is then returned to compressor heat exchanger 23. As shown in Table 1 herein below, the amount of heat generated by compressor 11 is more than enough to meet the regeneration heat requirements, thereby obviating the need for heat from an external source. As a result, the process of this invention may be made essentially self-sufficient for energy consumption.

In the process of this invention, the inlet compressor output pressure may be varied, reducing the size of the process equipment and amount of waste heat available for solvent regeneration while increasing power demand. It is also possible to vary the amount of acid gas removed in the first stage. Table 1 shows the results of an ASPEN simulation of one preferred embodiment of this invention using high pressure water in the first absorption stage and amine solvent for the second absorption stage. The simulation results show the impact of varying the pressure and water flow rate while maintaining a constant load to the second stage. The results were generated for an inlet gas having a composition of 45 mol% CO₂, 50 mol% CH₄, 2 mol% O₂, and 3 mol% N₂, a pressure of 15psia, and a temperature of 30°C. The raw biogas flow rate was 50 kmol/hr (about 1MMSCFD). The outlet gas from the first stage contained about 10 mol% CO₂ which was reduced to the pipeline specifications of 2 mol% CO₂ in the second amine absorption stage.

**Table 1. ASPEN Simulation Results**

| Compressor Outlet Pressure, psig | Compressor hp | Heat Generated by Compressor, Btu/hr | Amount of Water (kg/hr) | Outlet water absorption concentration, % | Regeneration Heat Requirement, Btu/hr |
|---|---|---|---|---|---|
| 200 | 200 | 538,000 | 137,484 | 10 | 420,000 |
| 300 | 233 | 632,000 | 98,858 | 10 | 420,000 |
| 400 | 257 | 704,000 | 68,809 | 10 | 420,000 |

Unlike single-step processes which only use water, this process is able to achieve pipeline-quality biogas from raw anaerobically produced gas or synthesis gas without additional input of energy. In addition, compared with amine-only systems, the process of this invention can be run with smaller equipment and may be self-sufficient for thermal loads to regenerate the solvent. This latter fact is important because most wastewater treatment facilities do not have boiler systems and auxiliaries such as boiler feed water purification.

A further aspect of the process of this invention is that the high water flow rates effectively dissipate the heat of absorption that results from the CO₂ removal which, in turn, reduces the heat of absorption and temperature rise in the second stage solvent column, allowing the column to operate more efficiently.

In accordance with one preferred embodiment of this invention, membrane contacting devices are used for any or all of the water absorber, solvent absorber, and/or solvent desorber operations. These contactors greatly reduce the size of the required contacting equipment. In addition, they have a higher gas-to-liquid ratio (G/L) operating range than conventional packed columns and, thus, can operate with greater flexibility in shifting loads between the first and second stages.

Compared with a conventional PSA process, the process of this invention utilizes the sour water for pH control to enhance biogas production or to improve the efficiency of the wastewater treatment process. In addition, the process does not vent most of the CO₂ removed from the raw biogas to the ambient, but rather approximately 85% of the inlet CO₂ may be used up in a pH control step, and methane loss is much lower. Compared with conventional membrane processes, the process of this invention utilizes the sour water for pH control to enhance biogas production or to improve the efficiency of the wastewater treatment process. Compared with conventional absorption processes using an amine or other chemical solvent, the regeneration energy of the amine is provided by the process equipment without adding any additional fired equipment, reducing CO₂ emissions and reducing operating and capital costs. The use of water minimizes the amount of solvent inventory in the plant as well as solvent losses to the environment during solvent regeneration. Compared with conventional packed column absorption processes, the use of a membrane contactor in accordance with one embodiment of this invention in place of a conventional packed column reduces or eliminates many of the problems associated with column-based processes such as foaming, solvent entrainment, and flooding. In addition, the process of this invention is modularly and linearly scalable as opposed to conventional columns, and it is up to 70% smaller in physical size than the conventional column.

While in the foregoing specification this invention has been described in relation to certain preferred embodiments thereof, and many details have been set forth for purpose of illustration, it will be apparent to those skilled in the art that the invention is susceptible to additional embodiments and that certain of the details described herein can be varied considerably without departing from the basic principles of the invention.

## Claims

1. A process for upgrading a gaseous stream containing CO₂ comprising the steps of:
introducing said gaseous stream and pressurized water into a first stage absorption process in which a portion of said CO₂ is absorbed by said pressurized water, producing sour water and a reduced∼CO2 gaseous stream; and
introducing said reduced-CO₂ gaseous stream and a chemical solvent suitable for absorbing *CO₂* into a second stage absorption process in which at least a portion of remaining CO₂ in said reduced-CO₂ gaseous stream is removed from said reduced-CO₂ gaseous stream, producing an acid gas stream, an upgraded gaseous stream, and a rich said chemical solvent.

2. The process of Claim 1, wherein said gaseous stream contains H₂S.

3. The process of Claim 2, wherein said H2S is removed from said gaseous stream prior to introduction of said gaseous stream into said first stage absorption process.

4. The process of Claim 2, wherein said gaseous stream containing said CO2 and said H2S is introduced into said first stage absorption process, said chemical solvent is suitable for absorbing CO2 and H2S, and said H2S is removed from said reduced-CO2 gaseous stream in said second stage absorption process.

5. The process of Claim 1, wherein said gaseous stream is selected from the group consisting of a raw biogas stream, a flue gas, *or* a synthesis gas, and combinations thereof.

6. The process of Claim 5 or 16, wherein said first stage absorption process is carried out in a first stage absorption vessel selected from the group consisting of a packed column absorber and a gas/liquid membrane contactor.

7. The process of Claim 6 or 16, wherein said second stage absorption process is carried out in a second stage absorption vessel selected from the group consisting of a packed column absorber and a gas/liquid membrane contactor.

8. The process of Claim 5, wherein said biogas is produced by an anaerobic process.

9. The process of Claim 8 or 16, wherein apart or ail of said sour water is used for pH control in said anaerobic process.

10. The process of Claim 5 or 16, wherein said sour water is flashed in a flash process, producing a flashed gas and flashed sour water.

11. The process of Claim 5, wherein said chemical solvent is an amine.

12. The process of Claim 10, wherein a part or all of said flashed sour water is used for pH control in said anaerobic process.

13. The process of Claim 10, wherein said flashed gas is introduced together with said biogas into said first stage absorption process.

14. The process of Claim 1, wherein heat generated by a compressor used to compress said gaseous stream is used to regenerate said rich chemical solvent for reuse in said second stage absorption process.

15. The process of Claim 1, wherein said process is carried out without using heat from a source external to said process.

16. A process for producing pipeline-quality biogas comprising the steps of:
generating raw biogas in an anaerobic biogas generation process, producing a raw biogas stream containing CO₂ and H₂S;
introducing said raw biogas stream and pressurized water into a first stage absorption process in which a portion of said CO₂ is absorbed by said pressurized water, producing sour water and a reduced-CO₂ biogas stream; and
introducing said reduced-CO₂ biogas stream and a chemical solvent suitable for absorbing CO₂ and H₂S into a second stage absorption process in which said H₂S and remaining CO₂ in said reduced-CO₂ biogas stream is removed from said reduced-CO₂ biogas stream, producing an acid gas stream and a pipeline-quality biogas stream.
